(19) Europäisches Patentamt
European Patent Office
Office européen des brevets

(11) **EP 3 162 966 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **16195573.7**

(22) Anmeldetag: **25.10.2016**

(51) Internationale Patentklassifikation (IPC):
*E02F 9/24* (2006.01)  *G06T 3/00* (2006.01)
*E02F 9/26* (2006.01)  *B60R 1/00* (2022.01)
*E02F 9/02* (2006.01)  *E02F 9/08* (2006.01)
*G06V 20/56* (2022.01)

(52) Gemeinsame Patentklassifikation (CPC):
**E02F 9/24; E02F 9/261; G06T 3/0062; G06V 20/56;**
E02F 9/024; E02F 9/028; E02F 9/085; G06V 10/247

(54) **VORRICHTUNG UND VERFAHREN ZUR BEREITSTELLUNG EINER FAHRZEUGGRUNDUMANSICHT**

DEVICE AND METHOD OF PREPARING A VIEW OF AROUND A WORK VEHICLE

DISPOSITIF ET PROCEDE POUR FOURNIR UNE VUE D'ENSEMBLE D'UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2015 DE 102015221356**

(43) Veröffentlichungstag der Anmeldung:
**03.05.2017 Patentblatt 2017/18**

(73) Patentinhaber:
• **Continental Autonomous Mobility Germany GmbH**
**85057 Ingolstadt (DE)**
• **Deere & Company**
**Moline, IL 61265 (US)**

(72) Erfinder:
• **Petzold, Johannes**
**95326 Kulmbach (DE)**

• **Selensky, Denis**
**65936 Frankfurt (DE)**
• **Haiges, Wolfram**
**Moline, IL Illinois 61265 (US)**
• **Wolff, Kilian**
**Moline, IL Illinois 61265 (US)**

(74) Vertreter: **Isarpatent**
**Patent- und Rechtsanwälte Barth**
**Charles Hassa Peckmann & Partner mbB**
**Friedrichstrasse 31**
**80801 München (DE)**

(56) Entgegenhaltungen:
**EP-B1- 1 115 250    DE-T5-112012 004 354**
**JP-A- 2013 074 350    JP-A- 2014 225 803**
**US-A1- 2013 162 830**

**Beschreibung**

Die Erfindung betrifft eine Vorrichtung und ein Verfahren zur Bereitstellung einer Fahrzeugrundumansicht für ein Fahrzeug, insbesondere für ein landwirtschaftliches Nutzfahrzeug.

DE 11 2012 004 354 T5 offenbart eine Vorrichtung zur Überwachung der Umgebung einer Baumaschine, wie beispielsweise einem Bagger oder einem Kipper. Hierzu kann die Änderung der Höhe einer an der Baumaschinen angebrachten Kamera berücksichtigt werden.

JP 2014 225803 A offenbart eine Bereitstellung einer Peripherieüberwachungsvorrichtung für eine Arbeitsmaschine, die einen Bediener leichter verständlicher über die Situation eines peripheren planimetrischen Merkmals, wie einer Klippe, einer Konkavität, einer Neigung, insbesondere eines Lochs, informieren kann.

US 2013/162830 A1 offenbart eine Überwachungsvorrichtung für ein Fahrzeug. Wenn sich das Fahrzeug im gestoppten Zustand befindet, erzeugt verwendet eine Bilderzeugungseinheit eine erste virtuelle Projektionsebene, um ein Vogelperspektivbild zu erzeugen. Wenn sich das Fahrzeug im Fahrzustand befindet, wird eine zweite virtuelle Projektionsebene verwendet.

EP 1115250 B1 offenbart eine Vorrichtung und ein Verfahren zur Bildanzeige. Mehrere Kameras erfassen Bilddaten, die gemeinsam angezeigt werden sollen. Zum Kalibrieren der Vorrichtung können Lichtmuster in der Umgebung projiziert werden. Beispielsweise können Lichtmuster auf die Oberfläche einer Straße projiziert werden.

Fahrerassistenzsysteme für Fahrzeuge bieten zunehmend die Möglichkeit, dem Fahrer des Fahrzeugs eine Fahrzeugrundumansicht bzw. einen Surround View auf einer Anzeigeeinheit anzuzeigen, um den Fahrer bei der Durchführung verschiedener Fahrmanöver zu unterstützen. Hierzu liefern Fahrzeugkameras, die in dem Fahrzeug angebracht sind, Kamerabilder einer Fahrzeugumgebung des Fahrzeugs. Zur Erzeugung einer Fahrzeugrundumansicht bzw. eines Surround Views werden diese Kamerabilder durch eine Bilddatenverarbeitungseinheit des Fahrerassistenzsystems auf eine Projektionsfläche projiziert. Die auf diese Weise erzeugte Fahrzeugrundumansicht wird anschließend auf einer Anzeigeeinheit bzw. einem Display dem Fahrer des Fahrzeugs angezeigt.

Die an der Fahrzeugkarosserie des Fahrzeugs angebrachten Fahrzeugkameras können intrinsisch oder extrinsisch kalibriert werden, um die Kamerabilder der Fahrzeugumgebung des Fahrzeugs kontinuierlich an die Bilddatenverarbeitungseinheit des Fahrerassistenzsystems zu übertragen. Die von den Fahrzeugkameras erhaltenen Kamerabilder werden durch die Bilddatenverarbeitungseinheit auf eine Projektionsfläche gemappt bzw. projiziert, um eine Fahrzeugrundumansicht zu erzeugen. Die Projektionsfläche ist bei herkömmlichen Fahrerassistenzsystemen für eine horizontale Fahrebene vorgesehen.

Landwirtschaftliche Nutzfahrzeuge sind auch in Hanglagen einsetzbar. Weiterhin verfügen beispielsweise manche Baufahrzeuge über ausklappbare bzw. ausführbare Stabilisatoren, um die Standfestigkeit des Baufahrzeugs zu erhöhen. Diese Stabilisatoren beeinflussen die Neigung des Baufahrzeugs in Relation zum Untergrund. Die Stabilisatoren und/oder sonstige Aktoren, beispielsweise Baggergreifarme oder Schaufeln, werden zum Teil auch genutzt, um das Baufahrzeug gezielt schräg zu stellen. Dies ist speziell bei feinem Untergrund hilfreich, um eine schräge Seitenwand, insbesondere beim Ausheben eines Grabens zu realisieren.

Befindet sich ein Fahrzeug auf einer geneigten Fahrebene bzw. Hangebene oder wird die Neigung des Fahrzeugs, beispielsweise durch ausfahrbare Stabilisatoren schräg gestellt, kommt es aufgrund der Lageänderung der an der Fahrzeugkarosserie angebrachten Fahrzeugkameras relativ zu der normalen, im Wesentlichen horizontal verlaufenden Fahrebene oder Standebene des Fahrzeugs zu Projektions- bzw. Bildverzerrungen, welche die Bildqualität der angezeigten Fahrzeugrundumansicht vermindern.

Es ist daher eine Aufgabe der vorliegenden Erfindung, ein Verfahren und eine Vorrichtung zur Bereitstellung einer Fahrzeugrundumansicht für ein Fahrzeug zu schaffen, bei dem eine ausreichende Bildqualität der Fahrzeugrundumansicht bei einer beliebigen Neigung des Fahrzeugs oder der Fahr- bzw. Standebene gewährleistet wird.

Diese Aufgabe wird erfindungsgemäß durch eine Vorrichtung zur Bereitstellung einer Fahrzeugrundumansicht für ein Fahrzeug mit den in Patentanspruch 1 angegebenen Merkmalen gelöst.

Bei einer möglichen Ausführungsform der erfindungsgemäßen Vorrichtung ist die Bilddatenverarbeitungseinheit dazu ausgelegt, die Projektionsfläche in Abhängigkeit von der ermittelten Lageänderung der mindestens einen Fahrzeugkamera relativ zu der normalen Fahr- oder Standebene um eine oder mehrere Drehachsen zu rotieren und/oder relativ zu einem Koordinatensystemursprung translatorisch zu verschieben.

Bei einer möglichen Ausführungsform der erfindungsgemäßen Vorrichtung ist die von der Bilddatenverarbeitungseinheit verwendete Projektionsfläche eine schalenförmige Projektionsfläche, die in Abhängigkeit von der ermittelten Lageänderung der mindestens einen Fahrzeugkamera dynamisch angepasst wird.

Bei einer weiteren möglichen Ausführungsform der erfindungsgemäßen Vorrichtung ist die Bilddatenverarbeitungseinheit konfiguriert, eine Drehmatrix auf Basis von Neigungswinkeln zu generieren, die von der Neigungs-Erfassungseinheit erfasst werden.

Bei einer weiteren möglichen Ausführungsform der erfindungsgemäßen Vorrichtung werden durch die Bilddatenverarbeitungseinheit Projektionsflächenpunkte der Projektionsfläche mit der generierten Drehmatrix zur dynamischen Anpassung der Projektionsfläche multipliziert.

Bei einer weiteren möglichen Ausführungsform der erfindungsgemäßen Vorrichtung sind die Fahrzeugkameras an einer Fahrzeugkarosserie des Fahrzeugs und/oder an einer Fahrerkabine des Fahrzeugs angebracht.

Bei einer weiteren möglichen Ausführungsform der erfindungsgemäßen Vorrichtung ist die Fahrerkabine mit den daran angebrachten Fahrzeugkameras relativ zu der Fahrzeugkarosserie des Fahrzeugs drehbar gelagert.

Bei einer weiteren möglichen Ausführungsform der erfindungsgemäßen Vorrichtung ist eine Dreh-Erfassungseinheit vorgesehen, die eine Drehung der Fahrerkabine relativ zu der Fahrzeugkarosserie des Fahrzeugs erfasst.

Bei einer weiteren möglichen Ausführungsform der erfindungsgemäßen Vorrichtung ermittelt die Lage-Ermittlungseinheit die Lageänderung der mindestens einen Fahrzeugkamera in Abhängigkeit von der durch die Drehungs-Erfassungseinheit erfassten Drehung der Fahrerkabine relativ zu der Fahrzeugkarosserie.

Bei einer weiteren möglichen Ausführungsform der erfindungsgemäßen Vorrichtung ist eine Anzeigeeinheit vorgesehen, welche die erzeugte Fahrzeugrundumansicht einem Fahrer des Fahrzeugs optisch anzeigt.

Bei einer möglichen Ausführungsform ist das Fahrzeug (F) in eine gegenüber einer normalen, im Wesentlichen horizontal verlaufenden Fahr- oder Standebene geneigte Stellung mittels Aktoren oder Stabilisatoren verbracht. Alternativ befindet sich das Fahrzeug auf einer gegenüber einer normalen, im Wesentlichen horizontalen Fahr- oder Standebene schräg geneigten Hangebene.

Die Erfindung schafft ferner gemäß einem weiteren Aspekt ein Verfahren zum Bereitstellen einer Fahrzeugrundumansicht für ein Fahrzeug mit den in Patentanspruch 11 angegebenen Merkmalen.

Die Erfindung schafft ferner gemäß einem weiteren Aspekt ein Fahrerassistenzsystem mit den in Patentanspruch 12 angegebenen Merkmalen.

Die Erfindung schafft ferner gemäß einem weiteren Aspekt ein Fahrzeug mit einem derartigen Fahrerassistenzsystem. Bei dem Fahrzeug handelt es sich vorzugsweise um ein Landfahrzeug, insbesondere um ein Baufahrzeug, ein landwirtschaftliches Nutzfahrzeug oder ein Forstfahrzeug.

Im Weiteren werden verschiedene Ausführungsbeispiele des erfindungsgemäßen Verfahrens und der erfindungsgemäßen Vorrichtung zur Bereitstellung einer Fahrzeugrundumansicht unter Bezugnahme auf die beigefügten Figuren näher erläutert.

Es zeigen:

| | |
|---|---|
| Figur 1 | ein Blockschaltbild zur Darstellung einer möglichen ersten Ausführungsform der erfindungsgemäßen Vorrichtung zur Bereitstellung einer Fahrzeugrundumansicht; |
| Figur 2 | ein Blockschaltbild einer weiteren möglichen Ausführungsform der erfindungsgemäßen Vorrichtung zur Bereitstellung einer Fahrzeugrundumansicht für ein Fahrzeug; |
| Figur 3 | eine schematische Darstellung einer möglichen Ausführungsform eines Fahrzeugs, das ein Fahrerassistenzsystem mit einer erfindungsgemäßen Vorrichtung zur Bereitstellung einer Fahrzeugrundumansicht verwendet; |
| Figuren 4A, 4B, 4C | schematische Darstellungen zur Erläuterung der Funktionsweise des in Figur 3 dargestellten Fahrerassistenzsystems; |
| Figur 5 | ein Ablaufdiagramm zur Darstellung eines Ausführungsbeispiels eines erfindungsgemäßen Verfahrens zum Bereitstellen einer Fahrzeugrundumansicht für ein Fahrzeug; |
| Figur 6 | eine schematische Darstellung einer schalenförmigen Projektionsfläche, wie sie bei dem erfindungsgemäßen Verfahren eingesetzt werden kann. |

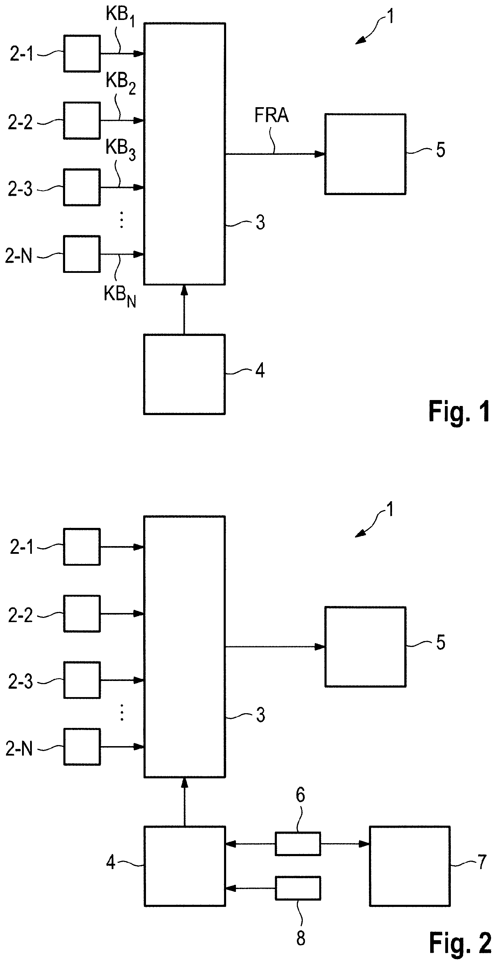

Das in Figur 1 dargestellte Blockschaltbild zeigt ein Ausführungsbeispiel einer erfindungsgemäßen Vorrichtung 1 zur Bereitstellung einer Fahrzeugrundumansicht FRA für ein Fahrzeug F. Die in Figur 1 dargestellte Vorrichtung zur Bereitstellung einer Fahrzeugrundumansicht bildet vorzugsweise einen Teil eines Fahrerassistenzsystems für ein Fahrzeug F, insbesondere ein Landfahrzeug, das sich auf einer Fahrebene oder Standebene befindet. Dieses Fahrzeug F kann sich auf der Fahrebene FE von einem Motor angetrieben bewegen oder auf einer Standebene stehen. Die Vorrichtung 1 umfasst mehrere Fahrzeugkameras 2-i, welche vorzugsweise kontinuierlich Kamerabilder KB einer Fahrzeugumgebung des Fahrzeugs F liefern und über Signalleitungen einer Bilddatenverarbeitungseinheit 3 zuführen. Die Anzahl N der Fahrzeugkameras 2 kann für unterschiedliche Fahrzeuge F variieren. Bei einer möglichen Ausführungsform der erfindungsgemäßen Vorrichtung 1 sind mindestens vier Fahrzeugkameras 2 vorgesehen. Bei den Fahrzeugkameras 2 kann es sich bei einer möglichen Ausführungsform um sogenannte Fischaugenkameras handeln, die einen horizontalen Öffnungswinkel von mehr als 170° aufweisen. Die Fahrzeugkameras 2 können an einer Fahrzeugkarosserie KAR des Fahrzeuges F angebracht sein. Vorzugsweise sind die Fahrzeugkameras 2 auf verschiedenen Seiten der Fahrzeugkarosserie KAR, beispielsweise vorne, hinten, links und rechts, vorgesehen. Weiterhin können Fahrzeugkameras 2 bei einer möglichen Ausführungsform auch an einer drehbar auf der Fahrzeugkarosserie KAR gelagerten Fahrerkabine KAB angebracht sein. Fahrzeugkameras 2 liefern kontinuierlich Kamerabilder bzw. Bilddaten an die Bilddatenverarbeitungseinheit 3.

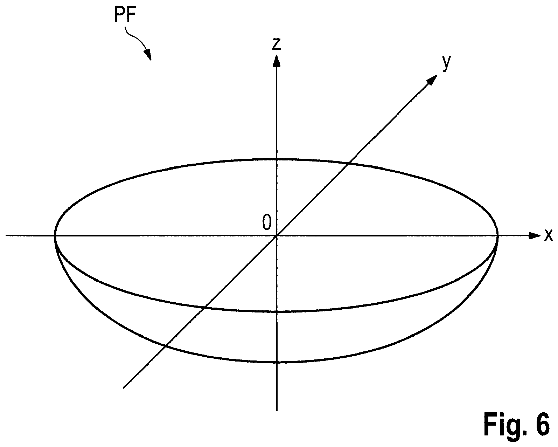

Die Vorrichtung 1 besitzt ferner eine Lage-Ermittlungseinheit 4, die eine Lageänderung mindestens einer oder aller Fahrzeugkameras 2-i relativ zu einer normalen Fahr- oder Standebene des Fahrzeugs F ermittelt. Die normale Fahr- oder Standebene verläuft vorzugsweise im Wesentlichen horizontal. Die Bilddatenverarbeitungseinheit 3 projiziert die von den Fahrzeugkameras 2 empfangenen Kamerabilder KB zur Erzeugung der Fahrzeugrundumansicht FRA auf eine Projektionsfläche PF. Diese Projektionsfläche PF wird durch die Bilddatenverarbeitungseinheit 3 in Abhängigkeit von der ermittelten Lageänderung der mindestens einen Fahrzeugkamera 2 relativ zu der normalen Fahr- oder Standebene angepasst. Die Projektionsfläche PF ist dabei vorzugsweise eine dreidimensionale schalenförmige Projektionsfläche, wie sie in Figur 6 dargestellt ist. Die durch die Bilddatenverarbeitungseinheit 3 berechnete Fahrzeugrundumansicht FRA wird über eine Signalleitung an eine Anzeigeeinheit 5 ausgegeben, welche dem Fahrer FA des Fahrzeugs F die Fahrzeugrundumansicht FRA optisch anzeigt. Die Fahrzeugkameras 2 bzw. das Fahrerassistenzsystem sind vorzugsweise für die normale, im Wesentlichen horizontal verlaufende Fahr- oder Standebene kalibriert. Die normale Fahr- bzw. Standebene ist vorzugsweise diejenige Ebene, welche das Fahrzeug in einem normalen Arbeitsbetrieb benutzt. Die normale Referenzebene ist für die meisten Fahrzeuge eine horizontal verlaufene Ebene. Für spezielle Fahrzeuge kann die normale Referenzebene anders ausgerichtet sein.

Die Bilddatenverarbeitungseinheit 3 weist vorzugsweise mindestens einen Prozessor auf, der die Projektionsfläche PF in Abhängigkeit von der ermittelten Lageänderung der Fahrzeugkameras 2 relativ zu der Fahrebene FE um eine oder mehrere Drehachsen x, y, z rotiert und/oder relativ zu einem Koordinatenursprung O translatorisch verschiebt. Bei einer bevorzugten Ausführungsform ist die verwendete Projektionsfläche PF eine schalenförmige Projektionsfläche. Diese wird in Abhängigkeit von der ermittelten Lageänderung der Fahrzeugkameras 2 dynamisch angepasst. Je nach Anwendungsfall können auch unterschiedliche Projektionsflächen verwendet werden. Beispielsweise kann die Projektionsfläche PF auch elliptisch ausgeformt sein oder planar.

Figur 2 zeigt ein weiteres Ausführungsbeispiel einer erfindungsgemäßen Vorrichtung 1 zur Bereitstellung einer Fahrzeugrundumansicht FRA für ein Fahrzeug F. Bei dem in Figur 2 dargestellten Ausführungsbeispiel umfasst die Vorrichtung 1 eine Neigungs-Erfassungseinheit 6, die eine momentan bestehende Neigung relativ zu der normalen, horizontalen Referenzebene bzw. normalen Ebene oder die Neigung eines schräg gestellten Fahrzeugs F relativ zu der normalen, horizontalen Referenzebene erfasst, insbesondere sensorisch erfasst. Die Lage-Ermittlungseinheit 4 ermittelt die Lageänderung der mindestens einen Fahrzeugkamera 2 relativ zu einer im Normalbetrieb benutzten Referenz-Fahrebene FE bzw. Referenzstandebene SE in Abhängigkeit von der durch die Neigungs-Erfassungseinheit 6 erfassten momentanen Neigung des Fahrzeugs F relativ zu der normalen Fahrebene bzw. Standebene. Zusätzlich verfügt das Fahrzeug F bei dem in Figur 2 dargestellten Ausführungsbeispiel über eine Neigungs-Ausgleichseinheit 7. Die von der Neigungs-Erfassungseinheit 6 erfasste momentane Neigung wird durch die Neigungs-Ausgleichseinheit 7 herangezogen, um die momentane Neigung der schrägen Fahrebene FE oder des schräg gestellten Fahrzeugs F auszugleichen. Dabei gleicht die Neigungs-Ausgleichseinheit 7 die Neigung der schrägen Fahrebene FE oder des schräg gestellten Fahrzeugs vorzugsweise derart aus, dass das Fahrzeug F optimal ausgerichtet ist, beispielsweise damit Arbeitsaggregate des Fahrzeugs F optimal arbeiten können. Beispielsweise ist es bei einem Mähdrescher wichtig, seine Drescharbeitsaggregate möglichst waagerecht zu stellen, um eine optimale Dreschqualität zu erreichen. Ferner kann ein in einer Fahrerkabine KAB des Fahrzeugs F vorgesehener Fahrersitz für den Fahrer FA des Fahrzeugs F durch die Neigungs-Ausgleichseinheit 7 im Wesentlichen stets horizontal ausgerichtet werden. Auf diese Weise sitzt der Fahrer FA des Fahrzeugs F selbst bei einer starken Neigung der Fahrebene FE bzw. einer steilen Hanglage bzw. bei einer Schrägstellung des Fahrzeugs F stets in bequemer Weise horizontal. Diese Schrägstellung erfolgt beispielsweise durch Stabilisatoren oder sonstige Aktoren, insbesondere Baggergreifarme oder Schaufeln, um das Fahrzeug für bestimmte Arbeitsvorgänge gezielt schräg zu stellen. Bei einer möglichen Ausführungsform erfasst die Neigungs-Erfassungseinheit 6 verschiedene Neigungswinkel $\alpha, \beta, \gamma$ einer dreidimensionalen schrägen Fahrebene FE. Diese Neigungswinkel werden der Lage-Ermittlungseinheit 4 zugeführt, welche die sensorisch erfassten Neigungswinkel an die Bilddatenverarbeitungseinheit 3 weitergeben kann. Bei einer möglichen Ausführungsform generiert die Bilddatenverarbeitungseinheit 3 eine Drehmatrix DM auf Basis der erhaltenen Neigungswinkel $\alpha, \beta, \gamma$ der schrägen Fahrebene FE oder des schräg gestellten Fahrzeugs. Bei einer möglichen Ausführungsform werden Projektionsflächenpunkte der Projektionsfläche PF, insbesondere der schalenförmigen Projektionsfläche, mit der generierten Drehmatrix DM durch einen Prozessor der Bilddatenverarbeitungseinheit 3 zur dynamischen Anpassung der Projektionsfläche multipliziert:

$$PF' = DM \cdot PF$$

Bei einer möglichen Ausführungsform der erfindungsgemäßen Vorrichtung ist eine Fahrerkabine KAB relativ zu der Fahrzeugkarosserie KAR des Fahrzeugs F drehbar gelagert, wobei eine Dreh-Erfassungseinheit 8 eine Drehung der Fahrerkabine KAB relativ zu der Fahrzeugkarosserie KAR des Fahrzeugs F erfasst. Bei einer möglichen Ausführungsform ermittelt die Lage-Ermittlungseinheit 4 die Lageänderung der mindestens einen Fahrzeugkamera 2 relativ zu der Fahrebene FE bzw. Standebene zusätzlich in Abhängigkeit von der durch die Drehungs-Erfassungseinheit 8 erfassten Drehung der Fahrerkabine KAB.

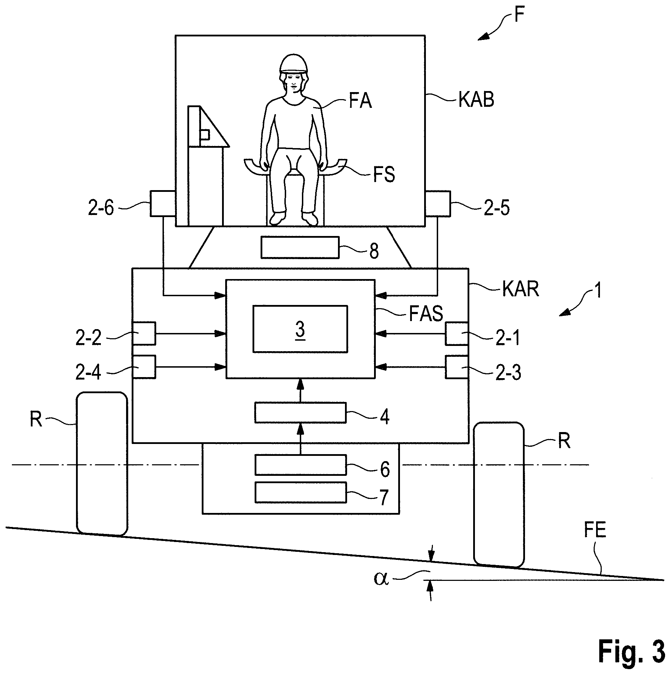

Figur 3 zeigt ein Ausführungsbeispiel des Fahrzeugs F mit einem Fahrerassistenzsystem FAS, welches die in den Figuren 1 und 2 dargestellte erfindungsgemäße Vorrichtung 1 zur Bereitstellung einer Fahrzeugrundumansicht für das Fahrzeug F umfasst. Das Fahrzeug F ist bei einer möglichen Ausführungsform eine Landmaschine, beispielsweise ein Mähdrescher, ein Traktor, ein Feldhäcksler, eine selbstfahrende Feldspritze oder ein Baumwollpflücker. Weiterhin kann es sich bei dem Fahrzeug F auch um eine Bau- oder Forstmaschine handeln, beispielsweise um einen Bagger oder eine Holzerntemaschine. Bei einer weiteren möglichen Ausführungsform handelt es sich bei dem Fahrzeug F um einen Feuerwehrwagen, der beispielsweise mittels Stützposten auf einer Fahrebene FE zur Feuerbekämpfung aufgebockt wird. Das Fahrzeug F kann auch Hubeinrichtungen oder Kranaufbauten aufweisen. Weiterhin kann es sich bei dem Fahrzeug F um einen Geländewagen oder dergleichen handeln.

Bei dem in Figur 3 dargestellten Ausführungsbeispiel ist das Fahrzeug F eine Landmaschine, welche sich auf einer geneigten Fahrebene FE befindet. Das Fahrzeug F steht auf der Fahrebene bzw. Standebene oder bewegt sich motorangetrieben auf der Fahrebene FE. Das Fahrzeug F verfügt über eine Karosserie KAR, bei der eine Fahrerkabine KAB drehbar gelagert ist. An der Fahrzeugkarosserie KAR des Fahrzeugs F sind in dem dargestellten Ausführungsbeispiel vier Fahrzeugkameras 2-i angebracht, beispielsweise vorne, hinten und an den beiden Seiten der Fahrzeugkarosserie KAR. Darüber hinaus sind in dem dargestellten Ausführungsbeispiel an der drehbar gelagerten Fahrerkabine KAB zwei weitere Fahrzeugkameras 2-5, 2-6 vorgesehen, die die Kamerabilder KB an die Bilddatenverarbeitungseinheit 3 des Fahrerassistenzsystems FAS des Fahrzeugs F liefern. Die Fahrzeugkarosserie KAR wird durch einen Motor angetrieben, welcher die Räder R des Fahrzeugs antreibt. Die Räder R des Fahrzeugs F befinden sich, wie in Figur 3 dargestellt, auf einer geneigten Fahrebene FE bzw. auf einem geneigten Hang. In dem dargestellten Beispiel weist die Fahrebene FE einen Neigungswinkel $\alpha$ auf. Alternativ kann das Fahrzeug F auch mittels Stabilisatoren in eine Schräglage gegenüber der normalen Fahrebene bzw. Standebene versetzt werden. Hierbei ist der Untergrund meist im Wesentlichen eben bzw. verläuft horizontal während das Fahrzeug F gezielt schräg gestellt wird, beispielsweise mittels Stabilisatoren oder Aktoren. Das Fahrzeug F verfügt über eine Neigungs-Erfassungseinheit 6, welche die momentan bestehende Neigung der Fahrebene FE bzw. der Schräglage des Fahrzeugs F relativ zur Standebene bzw. dem Untergrund erfasst. Hierzu kann die Neigungs-Erfassungseinheit 6 über Neigungssensoren verfügen, die verschiedene Neigungswinkel $\alpha$, $\beta$, $\gamma$ der Fahrebene FE bzw. des schräggestellten Fahrzeugs F sensorisch erfassen. Die Lage-Ermittlungseinheit 4 der Vorrichtung 1 ermittelt die Lageänderung der Fahrzeugkameras 2-1 bis 2-6 relativ zu der Fahrebene FE bzw. Standebene in Abhängigkeit von der durch die Neigungs-Erfassungseinheit 6 sensorisch erfassten Neigung der Fahrebene FE bzw. Neigung des schräg aufgestellten Fahrzeugs F relativ zum flachen Untergrund. Die Neigungs-Ausgleichseinheit 7 gleicht die erfasste Neigung der Fahrebene FE derart aus, dass ein in der Fahrerkabine FK vorgesehener Fahrersitz FS mit einem darauf sitzenden Fahrer FA und/oder ein Arbeitsaggregat des Fahrzeugs F selbst bei relativ starker Neigung der Fahrebene FE stets im Wesentlichen horizontal ausgerichtet ist. Hierzu wird vorzugsweise mit einer sogenannten Hangausgleichsfunktion ein bestehendes Gefälle durch Neigen der Fahrzeugkarosserie KAR ausgeglichen. Bei einer möglichen Ausführungsform wird der von der Hangausgleichsfunktion verwendete Ausgleichsneigungswinkel der Lage-Ermittlungseinheit 4 zugeführt, welche auf Basis des erhaltenen Ausgleichsneigungswinkels die Lageänderung der mindestens einen Fahrzeugkamera 2 relativ zu der Fahrebene FE ermittelt.

Die Fahrerkabine FK ist bei dem in Figur 3 dargestellten Ausführungsbeispiel relativ zu der Fahrzeugkarosserie KAR des Fahrzeugs F drehbar gelagert. Die Drehungs-Erfassungseinheit 8 erfasst eine Drehung der Fahrerkabine KAB relativ zu der Fahrzeugkarosserie KAR des Fahrzeugs F, beispielsweise mittels vorhandener Drehsensoren. Die Lage-Ermittlungseinheit 4 ermittelt vorzugsweise die Lageänderung der mindestens einen Fahrzeugkamera, insbesondere der in Figur 3 dargestellten Fahrzeugkameras 2-5, 2-6, in Abhängigkeit von der durch die Drehungs-Erfassungseinheit 8 erfassten Drehung der Fahrerkabine KAB relativ zu der Karosserie KAR des Fahrzeugs F. Die in Figur 3 dargestellten Fahrzeugkameras 2-1 bis 2-4 sind vorzugsweise sogenannte Fischaugenkameras, die an den vier Seitenflächen der Fahrzeugkarosserie KAR vorgesehen sind.

Auch die an der Fahrzeugkarosserie KAR angebrachten Fahrzeugkameras 2-5, 2-6 sind bei einer möglichen Ausführungsform Fischaugenkameras mit einem Öffnungswinkel von mehr als 170°, vorzugsweise 175° oder mehr. Bei einer möglichen Ausführungsform kann die Neigungs-Ausgleichseinheit 7 eine an den Fahrzeugrädern R vorgesehene Schwenkvorrichtung umfassen, welche das Fahrzeug F innerhalb bestimmter Grenzen in einer waagrechten Lage hält. Die Schwenkvorrichtung bildet dabei eine Verbindung zwischen einer Antriebsquelle einerseits und einem Radträger des Rades R andererseits.

Die Lage-Ermittlungseinheit 4 kann über weitere Sensoren verfügen. Beispielsweise kann die Lage-Ermittlungseinheit 4 Lagesensoren, insbesondere gyroskopische Sensoren, enthalten, um die Neigung der Fahrebene FE zu bestimmen und daraus die Lageänderung der Fahrzeugkameras 2 relativ zu der Fahrebene FE bzw. Standebene zu berechnen. Bei einer weiteren möglichen Ausführungsform kann die Lage-Ermittlungseinheit 6 weitere Daten heranziehen, die beispielsweise von einem Empfänger des Fahrerassistenzsystems FAS empfangen werden. Bei einer möglichen Ausführungsform verfügt das Fahrerassistenzsystem FAS über einen GPS-Empfänger zum Empfang von GPS-Daten, welche durch die Lage-Ermittlungseinheit 6 ausgewertet werden. Weiterhin kann das Fahrerassistenzsystem FAS des Fahrzeugs F über ein Navigationssystem verfügen, welches Navigationsdaten an die Lage-Ermittlungseinheit 6 überträgt. Die Lage-Ermittlungseinheit 6 wertet dabei die erhaltenen Navigationsdaten und/oder GPS-Daten zur Ermittlung der Lageänderung der Fahrzeugkameras 2 relativ zu der normalen Fahr- oder Standebene zusätzlich aus. Die Anpassung der Projektionsfläche PF durch die Bilddatenverarbeitungseinheit 3 erfolgt vorzugsweise dynamisch, um eine sich bei Bewegung des Fahrzeugs F fortlaufend ändernde Fahrebene FE zu berücksichtigen. Dabei erfolgt die Neuberechnung der Projektionsfläche PF vorzugsweise durch die Datenverarbeitungseinheit 3 in Echtzeit.

Die von den Fahrzeugkameras 2 gelieferten Kamerabilder KB werden auf die berechnete Projektionsfläche PF projiziert, um die Fahrzeugrundumansicht FRA zu generieren, welche auf der Anzeigeeinheit 7 dem Fahrer FA angezeigt wird. Bei einer möglichen Ausführungsform wird die angezeigte Fahrzeugrundumansicht FRA mit weiteren Informationen angereichert bzw. werden weitere Informationen der Fahrzeugrundumsicht FRA überlagert. Beispielsweise wird eine erwartete Fahrtrajektorie des Fahrzeugs F aufgrund der Bewegung des Fahrzeugs auf der Fahrzeugebene FE in einer Overlay-Ansicht auf der Anzeigeeinheit 7 dem Fahrer FA angezeigt. Durch die stetige dynamische Anpassung der Projektionsfläche PF wird nicht nur die Bildqualität der angezeigten Fahrzeugrundumansicht FRA deutlich verbessert, sondern auch die Qualität der zusätzlich überlagert angezeigten Informationsdaten erhöht.

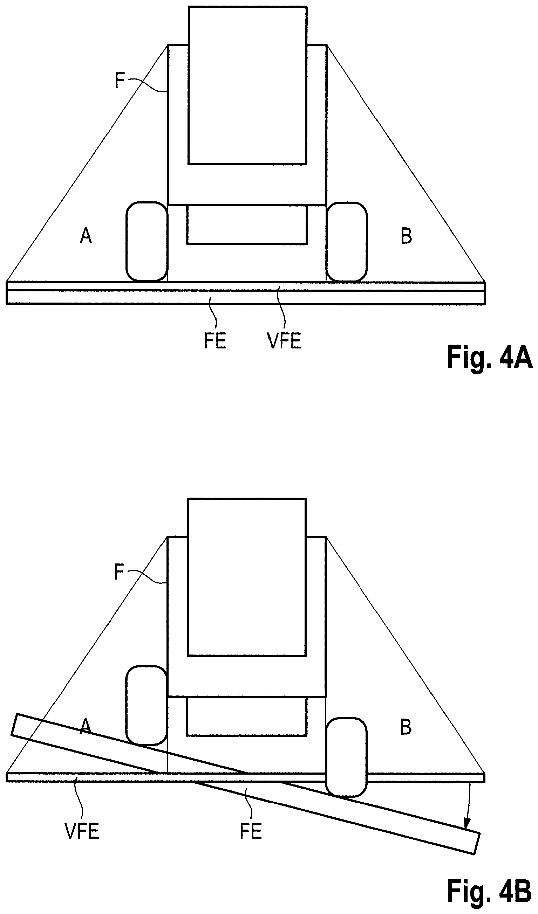

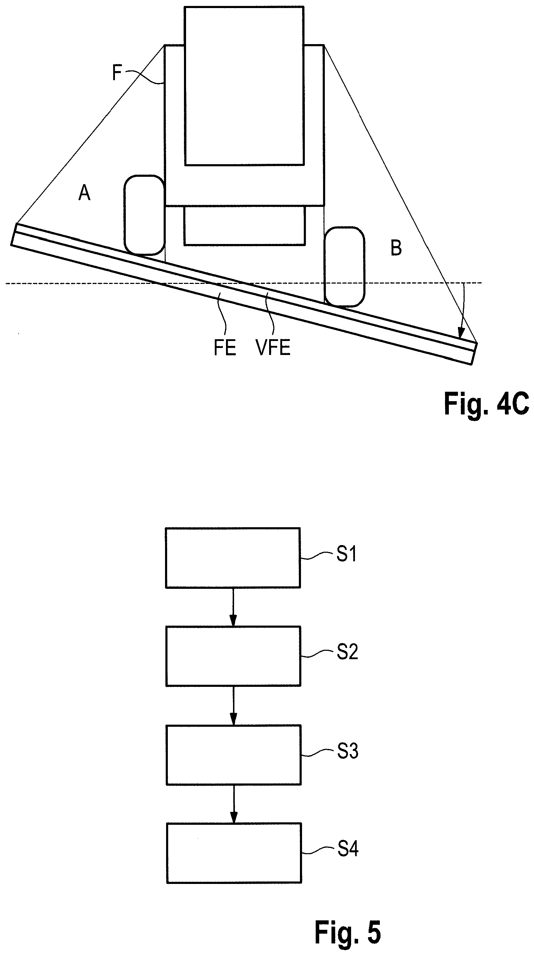

Figuren 4A, 4B, 4C verdeutlichen die Funktionsweise bei einem Ausführungsbeispiel der erfindungsgemäßen Vorrichtung 1 zur Bereitstellung der Fahrzeugrundumansicht. Figur 4A zeigt die Situation, bei dem sich ein Fahrzeug F auf einer horizontalen realen Fahrebene FE bewegt. Figur 4A zeigt die Projektionsflächen A, B zweier seitlich an der Fahrzeugkarosserie KAR des Fahrzeugs F angebrachter Fahrzeugkameras. Solange sich das Fahrzeug F auf einer horizontalen normalen Fahrebene FE befindet, stimmt eine virtuelle Fahrebene VFE mit der realen Fahrebene FE überein. Normalerweise stimmen die virtuelle und die reale Fahrebene überein, da das Fahrerassistenzsystem FAS für diese Fahrsituation kalibriert ist.

Figur 4B zeigt die Bewegung des Fahrzeugs F auf einer geneigten realen Fahrebene FE. In diesem Falle kann eine Hangausgleichsfunktion das Gefälle durch aktive Neigung der Fahrzeugkarosserie kompensieren bzw. ausgleichen. Dabei stimmen allerdings die virtuelle Fahrebene VFE und die reale Fahrebene FE nicht mehr überein und das projizierte Kamerabild KB auf die virtuelle Fahrebene VFE weicht von der realen Welt ab. Dies ist insbesondere bei überlappenden Bildbereichen von benachbarten Fahrzeugkameras deutlich bemerkbar. Alternativ ist es auch möglich, dass das Fahrzeug F gegenüber einer horizontalen Ebene gezielt schräg gestellt wird. Mit dem erfindungsgemäßen Verfahren und der erfindungsgemäßen Vorrichtung zur Bereitstellung einer Fahrzeugrundumansicht FRA wird die durch die Lageänderung bzw. Neigung auftretende Verzerrung kompensiert bzw. minimiert, indem die Projektionsfläche PF fortlaufend in Abhängigkeit von der ermittelten Lageänderung der Fahrzeugkameras 2 relativ zu der Fahrebene oder Standebene angepasst wird. Dies wird in Figur 4C schematisch verdeutlicht. Ein von einer Hangausgleichsfunktion eingesetzte Ausgleichsneigungswinkel kann beispielsweise über einen Datenbus, beispielsweise einen CAN-Datenbus, der Bilddatenverarbeitungseinheit 3 übermittelt werden, welche den zugeführten Neigungswinkel zur Fehlerkompensation einsetzt. Dabei kann die virtuelle Fahrebene VFE entsprechend dem Neigungswinkel transformiert werden, wie in Figur 4C schematisch dargestellt. Bei einer möglichen Ausführungsform wird die schalenförmige Projektionsfläche PF mithilfe einer Rotations- bzw. Drehmatrix DM transformiert. Die Bilddatenverarbeitungseinheit 3 rotiert dabei die schalenförmige Projektionsfläche PF in Abhängigkeit der ermittelten Lageänderung bzw. des ermittelten Neigungswinkels, indem sie die Projektionsfläche PF um eine oder mehrere Drehachsen x, y, z rotiert und/oder relativ zu einem Koordinatensystemursprung O translatorisch bewegt. Bei einer möglichen Ausführungsform wird die Drehmatrix DM auf Basis des übertragenen Neigungswinkels generiert und anschließend werden die Projektionsflächenpunkte der schalenförmigen Projektionsfläche mit der generierten Drehmatrix DM zur dynamischen Anpassung der Projektionsfläche PF multipliziert. Hierdurch wird die virtuelle Fahrebene VFE transformiert, wie in Figur 4C dargestellt, und Bildverzerrungen der Fahrzeugrundumansicht aufgrund der geneigten Fahrebene kompensiert bzw. ausgeglichen.

Figur 5 zeigt ein Ablaufdiagramm zur Darstellung eines Ausführungsbeispiels des erfindungsgemäßen Verfahrens zum Bereitstellen einer Fahrzeugrundumansicht FRA für ein Fahrzeug F, das sich auf einer Fahrebene FE oder Standebene befindet.

In einem ersten Schritt S1 werden Kamerabilder KB der Fahrzeugumgebung durch Fahrzeugkameras 2 erzeugt.

In einem weiteren Schritt S2 wird eine Lageänderung der Fahrzeugkameras 2 relativ zu der normalen Fahrebene FE bzw. Standebene ermittelt.

Anschließend erfolgt im Schritt S3 eine dynamische Anpassung der Projektionsfläche PF in Abhängigkeit von der ermittelten Lageänderung der Fahrzeugkameras 2.

Schließlich werden im Schritt S4 die von den Fahrzeugkameras 2 gelieferten Kamerabilder KB auf die angepasste Projektionsfläche PF' zur Erzeugung der Fahrzeugrundumansicht FRA projiziert. Diese Fahrzeugrundumansicht FRA wird anschließend auf einer Anzeigeeinheit dem Fahrer FA des Fahrzeugs F angezeigt.

Das in Figur 5 dargestellte Verfahren wird bei einer möglichen Ausführungsform durch einen Mikroprozessor der Datenverarbeitungseinheit 3 in Echtzeit ausgeführt. Das erfindungsgemäße Verfahren kann bei Fahrerassistenzsystemen FAS von beliebigen Fahrzeugen F, insbesondere Landfahrzeugen oder Baufahrzeugen, eingesetzt werden. Das erfindungsgemäße Verfahren eignet sich insbesondere für Fahrzeuge, die sich während des Betriebs auf einer stark geneigten Ebene befinden oder gegenüber einer Ebene gezielt zur Durchführung bestimmter Arbeiten geneigt werden.

**Patentansprüche**

1. Vorrichtung (1) zur Bereitstellung einer Fahrzeugrundumansicht (FRA) für ein Fahrzeug (F), mit:

   - Fahrzeugkameras (2), die Kamerabilder (KB) einer Fahrzeugumgebung des Fahrzeugs (F) liefern;
   - einer Neigungs-Erfassungseinheit (6), die eine momentan bestehende Neigung des Fahrzeugs (F) relativ zu einer vorbestimmten Referenzebene erfasst;
   - einer Lage-Ermittlungseinheit (4), die eine Lageänderung mindestens einer Fahrzeugkamera (2) relativ zu der vorbestimmten Referenzebene des Fahrzeugs (F) in Abhängigkeit von der durch die Neigungs-Erfassungseinheit (6) erfassten Neigung ermittelt;
   - einer Neigungs-Ausgleichseinheit (7), welche die durch die Neigungs-Erfassungseinheit (6) erfasste Neigung derart ausgleicht, dass ein in einer Fahrerkabine (KAB) vorgesehener Fahrersitz (FS) und/oder ein Arbeitsaggregat des Fahrzeugs (F) im Wesentlichen horizontal ausgerichtet ist, und mit
   - einer Bilddatenverarbeitungseinheit (3), welche die von den Fahrzeugkameras (2) gelieferten Kamerabilder (KB) zur Erzeugung der Fahrzeugrundumansicht (FRA) auf eine Projektionsfläche (PF) projiziert, welche in Abhängigkeit von der ermittelten Lageänderung der Fahrzeugkamera (2) angepasst wird.

2. Vorrichtung nach Anspruch 1,
   wobei die Bilddatenverarbeitungseinheit (3) die Projektionsfläche (PF) in Abhängigkeit von der ermittelten Lageänderung der mindestens einen Fahrzeugkamera (2) relativ zu der vorbestimmten Referenzebene um eine oder mehrere Drehachsen rotiert und/oder relativ zu einem Koordinatensystemursprung translatorisch verschiebt.

3. Vorrichtung nach Anspruch 1 oder 2,
   wobei die Projektionsfläche (PF) eine schalenförmige Projektionsfläche ist, die in Abhängigkeit von der ermittelten Lageänderung der mindestens einen Fahrzeugkamera (2) dynamisch angepasst wird.

4. Vorrichtung nach einem der vorangehenden Ansprüche 1 bis 3,
   wobei die Bilddatenverarbeitungseinheit (3) eine Drehmatrix auf Basis von Neigungswinkeln generiert, die von der Neigungs-Erfassungseinheit (6) erfasst werden.

5. Vorrichtung nach Anspruch 4,
   wobei Projektionsflächenpunkte der Projektionsfläche (PF) mit der generierten Drehmatrix durch die Bilddatenverarbeitungseinheit (3) zur dynamischen Anpassung der Projektionsfläche (PF) multipliziert werden.

6. Fahrzeug (F) mit einer Vorrichtung nach einem der vorangehenden Ansprüche 1 bis 5,
   wobei die Fahrzeugkameras (2) an einer Fahrzeugkarosserie (KAR) des Fahrzeugs (F) und/oder an einer Fahrerkabine (KAB) des Fahrzeugs (F) angebracht sind.

7. Fahrzeug (F) nach Anspruch 6,
   wobei die Fahrerkabine (KAB) relativ zu der Fahrzeugkarosserie (KAR) des Fahrzeugs (F) drehbar gelagert ist.

8. Fahrzeug (F) nach Anspruch 7,
   wobei eine Drehungs-Erfassungseinheit (8) eine Drehung der Fahrerkabine (KAB) relativ zu der Fahrzeugkarosserie (KAR) des Fahrzeugs (F) erfasst.

9. Fahrzeug (F) nach Anspruch 8,
   wobei die Lage-Ermittlungseinheit (4) die Lageänderung der mindestens einen Fahrzeugkamera (2) in Abhängigkeit von der durch die Drehungs-Erfassungseinheit (8) erfassten Drehung ermittelt.

**10.** Fahrzeug (F) nach einem der Ansprüche 6 bis 9,
wobei eine Anzeigeeinheit (5) die erzeugte Fahrzeuggrundumansicht (FRA) einem Fahrer (FA) des Fahrzeugs (F) anzeigt.

**11.** Verfahren zum Bereitstellen einer Fahrzeuggrundumansicht (FRA) für ein Fahrzeug (F) mit den Schritten:

(a) Erzeugen (S1) von Kamerabildern (KB) der Fahrzeugumgebung des Fahrzeugs (F) durch Fahrzeugkameras (2);

- Erfassen einer momentan bestehenden Neigung des Fahrzeugs (F) relativ zu einer vorbestimmten Referenzebene;

(b) Ermitteln (S2) einer Lageänderung der Fahrzeugkameras (2) relativ zu der vorbestimmten Referenzebene des Fahrzeugs (F) in Abhängigkeit von der erfassten Neigung des Fahrzeugs (F);
(c) Anpassen (S3) einer Projektionsfläche (PF) in Abhängigkeit von der ermittelten Lageänderung der Fahrzeugkameras (2);

- Ausgleichen der erfassten Neigung derart, dass ein in einer Fahrerkabine (KAB) vorgesehener Fahrersitz (FS) und/oder ein Arbeitsaggregat des Fahrzeugs (F) im Wesentlichen horizontal ausgerichtet ist, und

(d) Projizieren (S4) der erzeugten Kamerabilder (KB) auf die angepasste Projektionsfläche (PF) zum Erzeugen der Fahrzeuggrundumansicht (FRA).

**12.** Fahrerassistenzsystem (FAS) für ein Fahrzeug (F) mit einer Vorrichtung (1) nach einem der vorangehenden Ansprüche 1 bis 5.

**Claims**

**1.** Device (1) for providing a vehicle surround view (FRA) for a vehicle (F), having:

- vehicle cameras (2) that provide camera images (KB) of an area surrounding the vehicle (F);
- an incline detecting unit (6) that detects a current incline of the vehicle (F) relative to a predetermined reference plane;
- a position determining unit (4) that determines a position change of at least one vehicle camera (2) relative to the predetermined reference plane of the vehicle (F) in dependence upon the incline that is detected by means of the incline detecting unit (6);
- an incline compensating unit (7) that compensates the incline that is detected by means of the incline detecting unit (6) in such a manner that a driver seat (FS) that is provided in a driver cabin (KAB) and/or a working assembly of the vehicle (F) is oriented essentially horizontally, and having
- an image data processing unit (3) that projects the camera images (KB) that are provided by the vehicle cameras (2) so as to generate the vehicle surround view (FRA) onto a projection surface (PF) that is adapted in dependence upon the determined position change of the vehicle camera (2).

**2.** Device according to claim 1,
wherein in dependence upon the determined position change of the at least one vehicle camera (2) relative to the predetermined reference plane the image data processing unit (3) rotates the projection surface (PF) about one or multiple axes of rotation and/or displaces the projection surface in a translational manner relative to a coordinate system origin.

**3.** Device according to claim 1 or 2,
wherein the projection surface (PF) is a shell-shaped projection surface that is dynamically adapted in dependence upon the determined position change of the at least one vehicle camera (2).

**4.** Device according to one of the preceding claims 1 to 3,
wherein the image data processing unit (3) generates a rotation matrix on the basis of the angles of inclination that are detected by the incline detecting unit (6).

**5.** Device according to claim 4,
wherein projection surface points of the projection surface (PF) are multiplied using the generated rotation matrix by means of the data processing unit (3) for the dynamic adaptation of the projection surface (PF).

**6.** Vehicle (F) having a device according to one of the preceding claims 1 to 5,
wherein the vehicle cameras (2) are attached to a vehicle body (KAR) of the vehicle (F) and/or to a driver cabin (KAB) of the vehicle (F).

**7.** Vehicle (F) according to claim 6,
wherein the driver cabin (KAB) is rotatably mounted relative to the vehicle body (KAR) of the vehicle (F).

**8.** Vehicle (F) according to claim 7,
wherein a rotation detecting unit (8) detects a rotation of the driver cabin (KAB) relative to the vehicle body (KAR) of the vehicle (F).

**9.** Vehicle (F) according to claim 8,
wherein the position determining unit (4) determines the position change of the at least one vehicle camera (2) in dependence upon the rotation that is detected by means of the rotation detecting unit (8).

**10.** Vehicle (f) according to one of claims 6 to 9,
wherein a display unit (5) displays the generated vehicle surround view (FRA) to a driver (FA) of the vehicle (F).

**11.** Method for providing a vehicle surround view (FRA) for a vehicle (F) having the steps:

(a) generating (S1) camera images (KB) of the surroundings of the vehicle (F) by means of vehicle cameras (2);

- detecting a current incline of the vehicle (F) relative to a predetermined reference plane;

(b) determining (S2) a position change of the vehicle cameras (2) relative to the predetermined reference plane of the vehicle (F) in dependence upon the detected incline of the vehicle (F);
(c) adapting (S3) a projection surface (PF) in dependence upon the determined position change of the vehicle cameras (2);

- compensating the detected incline in such a manner that a driver seat (FS) that is provided in a driver cabin (KAB) and/or a working assembly of the vehicle (F) is oriented essentially horizontally, and

(d) projecting (S4) the generated camera images (KB) onto the adapted projection surface (PF) so as to generate the vehicle surrounding view (FRA).

**12.** Driver assist system (FAS) for a vehicle (F) having a device (1) according to one of the preceding claims 1 to 5.


**Revendications**

**1.** Dispositif (1) pour fournir une vue panoramique de véhicule (FRA) pour un véhicule (F), comprenant :

- des caméras de véhicule (2) qui fournissent des images de caméra (KB) d'un environnement de véhicule du véhicule (F) ;
- une unité de détection d'inclinaison (6) qui détecte une inclinaison momentanée du véhicule (F) par rapport à un plan de référence prédéterminé ;
- une unité de détermination de position (4) qui détermine un changement de position d'au moins une caméra de véhicule (2) par rapport au plan de référence prédéterminé du véhicule (F) en fonction de l'inclinaison détectée par l'unité de détection d'inclinaison (6) ;
- une unité de compensation d'inclinaison (7) qui compense l'inclinaison détectée par l'unité de détection d'inclinaison (6) de telle sorte qu'un siège de conducteur (FS) prévu dans une cabine de conducteur (KAB) et/ou un organe de travail du véhicule (F) soit orienté sensiblement horizontalement, et comprenant
- une unité de traitement de données d'image (3) qui projette les images de caméra (KB) fournies par les caméras de véhicule (2) pour générer la vue panoramique de véhicule (FRA) sur une surface de projection (PF) qui est adaptée en fonction du changement de position déterminé de la caméra de véhicule (2).

2. Dispositif selon la revendication 1,
dans lequel l'unité de traitement de données d'image (3) fait tourner la surface de projection (PF) autour d'un ou plusieurs axes de rotation et/ou la déplace en translation par rapport à une origine de système de coordonnées en fonction du changement de position déterminé de ladite au moins une caméra de véhicule (2) par rapport au plan de référence prédéterminé.

3. Dispositif selon la revendication 1 ou 2,
dans lequel la surface de projection (PF) est une surface de projection en forme de coque qui est adaptée de manière dynamique en fonction du changement de position déterminé de ladite au moins une caméra de véhicule (2).

4. Dispositif selon l'une des revendications précédentes 1 à 3,
dans lequel l'unité de traitement de données d'image (3) génère une matrice de rotation sur la base d'angles d'inclinaison détectés par l'unité de détection d'inclinaison (6).

5. Dispositif selon la revendication 4,
dans lequel des points de surface de projection de la surface de projection (PF) sont multipliés par la matrice de rotation générée par l'unité de traitement de données d'image (3) pour adapter dynamiquement la surface de projection (PF).

6. Véhicule (F) équipé d'un dispositif selon l'une des revendications précédentes 1 à 5,
dans lequel les caméras (2) du véhicule sont montées sur une carrosserie de véhicule (KAR) du véhicule (F) et/ou sur une cabine de conducteur (KAB) du véhicule (F).

7. Véhicule (F) selon la revendication 6,
dans lequel la cabine de conducteur (KAB) est montée rotative par rapport à la carrosserie de véhicule (KAR) du véhicule (F).

8. Véhicule (F) selon la revendication 7,
dans lequel une unité de détection de rotation (8) détecte une rotation de la cabine de conducteur (KAB) par rapport à la carrosserie de véhicule (KAR) du véhicule (F).

9. Véhicule (F) selon la revendication 8,
dans lequel l'unité de détermination de position (4) détermine le changement de position de ladite au moins une caméra de véhicule (2) en fonction de la rotation détectée par l'unité de détection de rotation (8).

10. Véhicule (F) selon l'une des revendications 6 à 9,
dans lequel une unité d'affichage (5) affiche la vue panoramique de véhicule (FRA) générée à un conducteur (FA) du véhicule (F).

11. Procédé pour fournir une vue panoramique de véhicule (FRA) pour un véhicule (F), comprenant les étapes consistant à :

(a) générer (S1) des images de caméra (KB) de l'environnement de véhicule du véhicule (F) par des caméras de véhicule (2) ;

- détecter une inclinaison momentanée du véhicule (F) par rapport à un plan de référence prédéterminé ;

(b) déterminer (S2) un changement de position des caméras de véhicule (2) par rapport au plan de référence prédéterminé du véhicule (F) en fonction de l'inclinaison détectée du véhicule (F) ;
(c) adapter (S3) une surface de projection (PF) en fonction du changement de position déterminé des caméras de véhicule (2) ;

- compenser l'inclinaison détectée de telle sorte qu'un siège de conducteur (FS) prévu dans une cabine de conducteur (KAB) et/ou un organe de travail du véhicule (F) soit orienté sensiblement horizontalement, et

(d) projeter (S4) les images de caméra (KB) générées sur la surface de projection (PF) adaptée pour générer la vue panoramique de véhicule (FRA).

12. Système d'assistance à la conduite (FAS) pour un véhicule (F) comprenant un dispositif (1) selon l'une des revendications précédentes 1 à 5.

**Fig. 1**

**Fig. 2**

**Fig. 3**

**Fig. 4A**

**Fig. 4B**

**Fig. 4C**

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112012004354 T5
- JP 2014225803 A
- US 2013162830 A1
- EP 1115250 B1